# EUROPEAN PATENT APPLICATION

(11) **EP 4 847 763 A1**
(43) Date of publication of application: **02.12.2026**
(21) Application number: 24935048.9
(22) Date of filing: 29.08.2024
(51) Int. Cl.: F02D 45/00, F02B 77/08, F02D 19/02, F02D 43/00

(54) **COMBUSTION MONITORING DEVICE, COMBUSTION MONITORING METHOD, AND COMBUSTION MONITORING PROGRAM**

(30) Priority: 12.04.2024 JP 2024064455
(71) Applicant: MITSUBISHI HEAVY INDUSTRIES ENGINE & TURBOCHARGER, LTD., Sagamihara-shi, Kanagawa 252-5293 (JP)
(72) Inventor: NOMURA, Kazutoshi, Tokyo 100-8332 (JP)
(74) Representative: Studio Torta S.p.A.
(86) International application number: PCT/JP2024/030948
(87) International publication number: WO 2025/215860

(57) **Abstract**

A combustion monitoring apparatus for monitoring combustion of a fuel including a hydrogen fuel, which is periodically repeated in a combustion chamber of an engine, the combustion monitoring apparatus includes a combustion prolongation determination unit that determines, based on at least one of a pressure, a temperature, or a brightness in the combustion chamber, whether remaining combustion has occurred in which the combustion continues even after an end reference timing set for ending the combustion during one combustion cycle has arrived.

## Description

### Technical Field

The present disclosure relates to a combustion monitoring apparatus, a combustion monitoring method, and a combustion monitoring program for monitoring combustion in a combustion chamber of a hydrogen engine.

The present application claims the right of priority based on Japanese Patent Application No. 2024-064455 filed with the Japan Patent Office on April 12, 2024, the content of which is incorporated herein by reference.

### Background Art

An ECU that controls a hydrogen engine disclosed in PTL 1 determines that a precursor of a backfire is detected and executes control for lowering an in-cylinder temperature in a case where pre-ignition is detected. The pre-ignition is a phenomenon in which combustion starts in the combustion chamber after an intake valve is closed and before the hydrogen fuel is ignited, and in this case, an in-cylinder pressure is excessively increased. The backfire is a phenomenon in which a flame flows back from the combustion chamber to an intake passage.

### Citation List

### Patent Literature

[PTL 1] Japanese Unexamined Patent Application Publication No. 2016-130473

### Summary of Invention

### Technical Problem

In the hydrogen engine, there is a possibility that the backfire has already occurred before the pre-ignition is detected. Therefore, in a case where the intake valve is open at a timing at which a rise in the in-cylinder pressure is detected, it is determined that the backfire has occurred, and control for increasing a combustion speed in the combustion chamber is executed (see S101 to S103 illustrated in FIG. 2 of PTL 1).

In a case where the backfire occurs, there is a concern that a component of the hydrogen engine, such as an intake passage, may be damaged. Therefore, it is preferable to more accurately detect the precursor of the backfire.

An object of the present disclosure is to provide a combustion monitoring apparatus, a combustion monitoring method, and a combustion monitoring program capable of accurately detecting a precursor of a backfire.

### Solution to Problem

A combustion monitoring apparatus according to at least one embodiment of the present disclosure is a combustion monitoring apparatus for monitoring combustion of a fuel including a hydrogen fuel, which is periodically repeated in a combustion chamber of an engine, the combustion monitoring apparatus including:
a combustion prolongation determination unit that determines, based on at least one of a pressure, a temperature, or a brightness in the combustion chamber, whether remaining combustion has occurred in which the combustion continues even after an end reference timing set for ending the combustion during one combustion cycle has arrived.

A combustion monitoring method according to one embodiment of the present disclosure is a combustion monitoring method for monitoring combustion of a fuel including a hydrogen fuel, which is periodically repeated in a combustion chamber of an engine, the combustion monitoring method comprising:
determining, based on at least one of a pressure, a temperature, or a brightness in the combustion chamber, whether remaining combustion in which the combustion continues even after an end reference timing set for ending the combustion during one combustion cycle has arrived.

A combustion monitoring program according to one embodiment of the present disclosure is a combustion monitoring program for monitoring combustion of a fuel including a hydrogen fuel, which is periodically repeated in a combustion chamber of an engine,
the combustion monitoring program causing a computer to
determine, based on at least one of a pressure, a temperature, or a brightness in the combustion chamber, whether remaining combustion in which the combustion continues even after an end reference timing at which the combustion should end in one combustion cycle has arrived has occurred.

### Advantageous Effects of Invention

According to the present disclosure, it is possible to provide a combustion monitoring apparatus, a combustion monitoring method, and a combustion monitoring program capable of accurately detecting a precursor of a backfire.

### Brief Description of Drawings

FIG. 1 is a schematic view showing an engine according to the embodiment.
FIG. 2 is a schematic view showing a temporal change in pressure of a combustion chamber in association with one combustion cycle.
FIG. 3 is a schematic view of remaining combustion that can induce a backfire.
FIG. 4 is a schematic view of a combustion monitoring apparatus according to a first embodiment.
FIG. 5 is a schematic view showing a temporal change in heat release rate.
FIG. 6 is a flowchart of a combustion monitoring method according to the first embodiment.
FIG. 7 is a schematic view of a combustion monitoring apparatus according to a second embodiment.
FIG. 8 is a schematic view showing a temporal change in an integrated value of the heat release rate.
FIG. 9 is a flowchart of a combustion monitoring method according to the second embodiment.
FIG. 10 is a schematic view of a combustion monitoring apparatus according to a third embodiment.
FIG. 11 is a schematic view showing a temporal change in in-cylinder pressure.
FIG. 12 is a flowchart of a combustion monitoring method according to the third embodiment.
FIG. 13 is a schematic view of a combustion monitoring apparatus according to a fourth embodiment.
FIG. 14 is a flowchart of a combustion monitoring method according to the fourth embodiment.
FIG. 15 is a schematic view of a combustion monitoring apparatus according to a fifth embodiment.
FIG. 16 is a flowchart of a combustion monitoring method according to the fifth embodiment.

### Description of Embodiments

Hereinafter, some embodiments of the present disclosure will be described with reference to the accompanying drawings. Dimensions, materials, shapes, relative disposition, and the like of components described as embodiments or illustrated in the drawings are not intended to limit the scope of the present disclosure, but are merely explanatory examples.

For example, an expression indicating a relative disposition or an absolute disposition, such as "in a certain direction", "along a certain direction", "parallel", "orthogonal", "center", "concentric", or "coaxial", not only strictly represents such a disposition, but also represents a state of being relatively displaced with a tolerance, or an angle or a distance to the extent that the same function can be obtained.

For example, expressions such as "identical", "equal", and "homogeneous", which indicate that things are in the same state, not only represent a state of being strictly equal, but also represent a state in which there is a difference within a tolerance, or to an extent that the same function can be obtained.

For example, an expression indicating a shape such as a square shape or a cylindrical shape not only represents a shape such as a square shape or a cylindrical shape in a geometrically strict sense, but also represents a shape that includes concave and convex portions, chamfered portions, or the like to the extent that the same effects can be obtained.

Meanwhile, expressions such as "being provided with", "including", or "having" one component are not exclusive expressions excluding existence of other components.

The same configurations are denoted by the same reference numerals, and the description thereof may be omitted.

### <Outline of Engine 1>

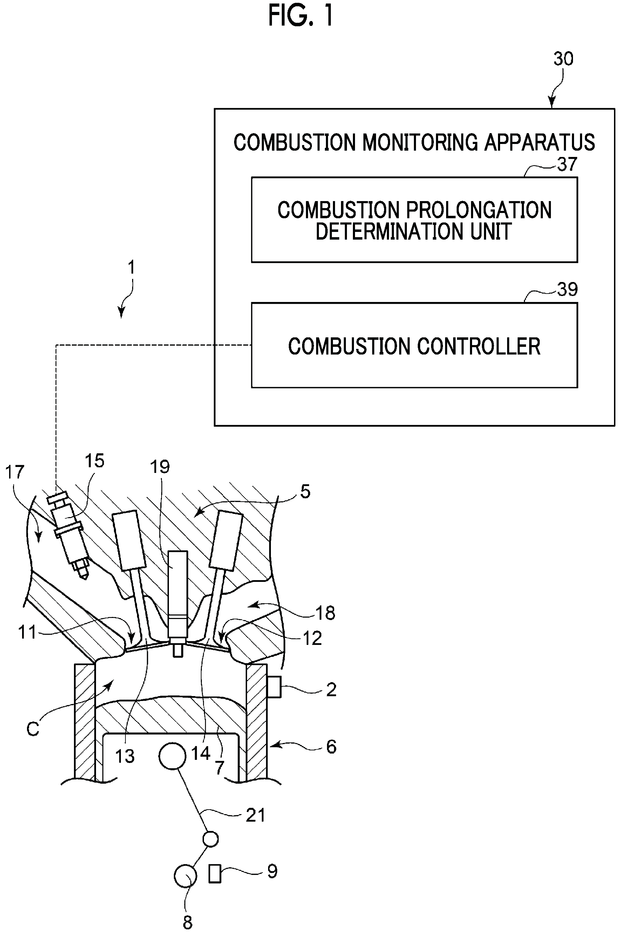

FIG. 1 is a schematic diagram of an engine 1 according to an embodiment of the present disclosure. The engine 1 is a four-cycle type hydrogen engine configured to use a fuel (fuel gas) including a hydrogen fuel. In a combustion chamber C of the engine 1, either combustion of the hydrogen fuel alone or co-combustion of the hydrogen fuel and another fuel may occur. As the other fuel, for example, gasoline or the like can be adopted.

The engine 1 includes a cylinder 6, a piston 7, and a cylinder head 5 that define the combustion chamber C, a crankshaft 8 that is connected to the piston 7 via a connecting rod 21, and a crank sensor 9 that detects a crank angle that is a phase of the crankshaft 8. In addition, a pressure sensor 2 for measuring a pressure of the combustion chamber C is provided in the cylinder 6 as an example. Hereinafter, the pressure of the combustion chamber C may be referred to as a "in-cylinder pressure".

In addition, the engine 1 further includes an intake valve 13 that opens and closes an intake port 11 provided in the cylinder head 5, an intake passage 17 that is connected to the intake port 11, a fuel injection device 15 that injects a fuel into the intake passage 17, an ignition device 19 that is provided in the cylinder head 5, an exhaust valve 14 that opens and closes an exhaust port 12 provided in the cylinder head 5, and an exhaust passage 18 that is connected to the exhaust port 12.

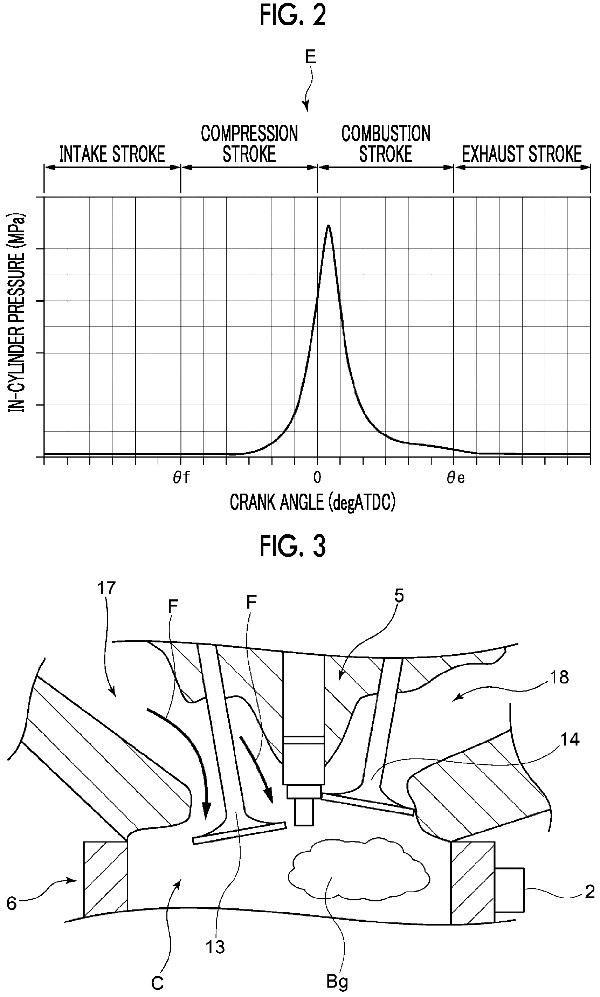

A combustion cycle E of the engine 1 will be described with reference to FIG. 2. A graph in the drawing shows a relationship between the pressure of the combustion chamber C and the crank angle in a case where normal combustion occurs in the combustion chamber C. The in-cylinder pressure shown on a vertical axis of the graph is a measured value obtained by the pressure sensor 2. A horizontal axis of the graph is an ATDC angle (After Top Dead Center) as a measured value obtained by the crank sensor 9. The ATDC angle is a crank angle expressed with a crank angle when the piston 7 reaches the top dead center as 0°.

During the operation of the engine 1, the combustion cycle E is continuously repeated. The combustion cycle E includes an intake stroke, a compression stroke, a combustion stroke, and an exhaust stroke. In the intake stroke, the intake valve 13 opens the intake port 11, so that the fuel injected from the fuel injection device 15 is sucked into the combustion chamber C together with the air. After the intake end timing (θf) at which the intake valve 13 closes the intake port 11 arrives, the piston 7 rises from the bottom dead center, and the compression stroke is started. At this time, the in-cylinder pressure rises.

Thereafter, the ignition device 19 operates near the timing at which the piston 7 reaches the top dead center, and the combustion stroke is started. After the in-cylinder pressure peaks out, the combustion stroke ends. The exhaust valve 14 opens the exhaust port 12 at the arrival of the exhaust start timing (θe). As a result, the combustion gas Bg (refer to FIG. 3) generated by the combustion in the combustion chamber C is discharged to the exhaust passage 18.

FIG. 3 is a schematic view showing the remaining combustion in the combustion chamber C that can induce a backfire. The remaining combustion is a phenomenon in which the combustion continues even after an end reference timing at which the combustion of the fuel should end in one combustion cycle E arrives. The remaining combustion means that a period of the combustion occurring in the combustion chamber C is prolonged, and does not occur in the normal combustion referred to in the present application. In addition, although merely an example, the end reference timing may be 20° ATDC or more and 90° ATDC or less, and more specifically, may be 35° ATDC or more and 45° ATDC or less. The end reference timing can vary depending on the combustion conditions in the combustion chamber C. For example, the end reference timing can vary depending on whether the combustion occurring in the combustion chamber C is a combustion of the hydrogen fuel alone or a co-combustion of the hydrogen fuel and the other fuel.

In a case where the remaining combustion occurs in any of the combustion cycles E that are continuously repeated, the high-temperature combustion gas Bg remains in the combustion chamber C at a timing at which the intake valve 13 opens the intake port 11 in the next combustion cycle E. In a case where the hydrogen fuel allowed to pass through the intake port 11 by the intake valve 13 is mixed with the high-temperature combustion gas Bg (arrow F in FIG. 3), the hydrogen fuel may be ignited before the ignition by the ignition device 19. This ignition may lead to the backfire in which the flame flows back to the intake passage 17.

The present inventors have focused on the fact that the remaining combustion is a phenomenon that may induce the backfire, and have devised the combustion monitoring apparatus 30 illustrated in FIG. 1. The combustion monitoring apparatus 30 is an apparatus for monitoring the combustion of the fuel including the hydrogen fuel, which is periodically repeated in the combustion chamber C, and includes a combustion prolongation determination unit 37 for determining whether the remaining combustion has occurred.

The combustion prolongation determination unit 37 determines whether the remaining combustion has occurred based on the in-cylinder pressure, the temperature in the combustion chamber C, or the brightness in the combustion chamber C. In a case where the remaining combustion occurs, all of the three specific values have high values, and thus it is possible to determine whether the remaining combustion has occurred. Therefore, according to the above configuration, the combustion monitoring apparatus 30 capable of detecting the precursor of the backfire is realized. Details of determining whether the remaining combustion has occurred by using any of the three characteristic values described above will be described later in a first embodiment, a second embodiment, a third embodiment, a fourth embodiment, and a fifth embodiment.

Even in a case where the remaining combustion occurs, the backfire does not necessarily occur in the next one combustion cycle E. In the present application, the terms "normal combustion" and "combustion in which the remaining combustion occurs" are used separately, but this is merely for convenience.

The outline of the combustion monitoring apparatus 30 will be described with reference to FIG. 1. The combustion monitoring apparatus 30 may further include a combustion controller 39. The combustion controller 39 executes control for lowering the temperature in the combustion chamber C in a case where the combustion prolongation determination unit 37 determines that the remaining combustion has occurred.

As a more specific example, the combustion controller 39 controls the fuel injection device 15 such that retardation of the fuel injection timing or a decrease in the fuel injection amount occurs. The retardation of the fuel injection timing is to delay the fuel injection timing in the next one combustion cycle E as compared with the fuel injection timing in the one combustion cycle E in which it is determined that the remaining combustion has occurred. As the timing is delayed, the mixing of the air and the high-temperature combustion gas in the combustion chamber C progresses, and the temperature of the combustion chamber C at the timing at which the fuel flows into the combustion chamber C is lowered. The decrease in the fuel injection amount is to decrease the fuel injection amount in the next one combustion cycle E as compared with the fuel injection amount in the one combustion cycle E in which it is determined that the remaining combustion has occurred. As the fuel injection amount is decreased, the combustion heat generated in the combustion chamber C is decreased, and the temperature of the combustion chamber C is lowered.

According to the above configuration, in a case where the combustion prolongation determination unit 37 determines that the remaining combustion has occurred, the combustion controller 39 controls the fuel injection device 15, so that at least one of the retardation of the fuel injection timing or the decrease in the fuel injection amount occurs. Accordingly, the temperature of the combustion chamber C in the next one combustion cycle E is lowered, so that the occurrence of the backfire in the next one combustion cycle E can be suppressed.

In a case where the retardation of the fuel injection timing by the combustion controller 39 is executed, it is preferable that the fuel injection amount is maintained between the two one combustion cycles E described above. Accordingly, a decrease in the output of the engine 1 in the next one combustion cycle E can be suppressed, and the stabilization of the output of the engine 1 can be achieved.

The control by the combustion controller 39 is not limited to the above. For example, the combustion controller 39 may change the mixing ratio of the hydrogen fuel and the other fuel of the fuel injected into the intake passage 17 in the next one combustion cycle E. More specifically, the combustion controller 39 may execute control for reducing the proportion of the hydrogen fuel. Alternatively, control for injecting water into the intake port 11 in the next one combustion cycle E may be executed. The control is realized by the combustion controller 39 controlling a water injection injector (not shown) provided in the intake port 11. As another example, the combustion controller 39 may execute control for increasing the air amount taken into the combustion chamber C in the intake stroke of the next one combustion cycle E.

As described above, the combustion prolongation determination unit 37 determines whether the remaining combustion has occurred by using at least one characteristic value of the in-cylinder pressure, the temperature in the combustion chamber C, or the brightness in the combustion chamber C. Hereinafter, a first embodiment to a third embodiment using the in-cylinder pressure, a fourth embodiment using the temperature, and a fifth embodiment using the brightness will be described in detail in order. Further, in the following description, the combustion in which the remaining combustion occurs during one combustion cycle E may be referred to as "abnormal combustion".

### <First Embodiment>

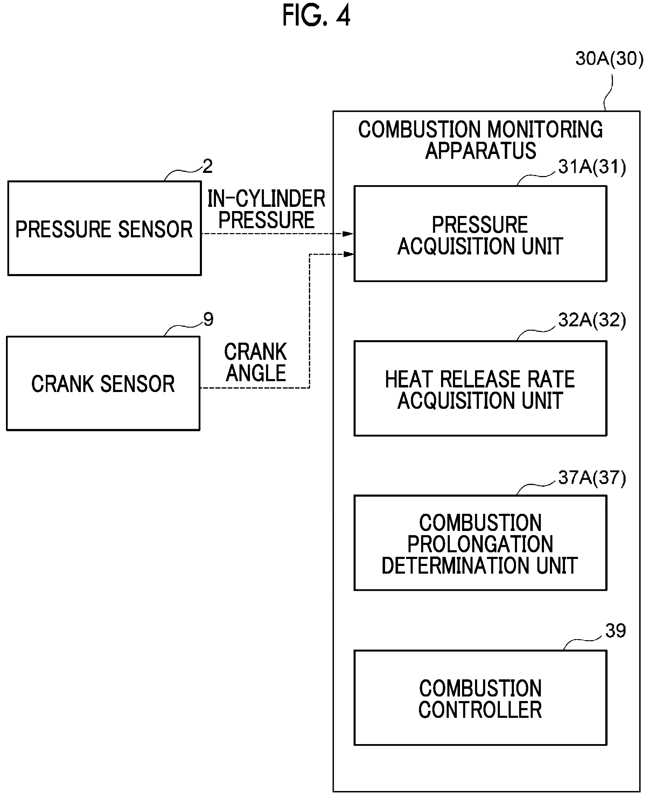

A combustion monitoring apparatus 30A (30) according to a first embodiment will be described with reference to FIGS. 4 to 6. In the first embodiment, whether the remaining combustion has occurred is determined based on the heat release rate in the combustion chamber C specified by using the in-cylinder pressure. The heat release rate is a change amount of heat generated by the combustion in the combustion chamber C per unit crank angle, and is a parameter correlated with the in-cylinder pressure, the volume of the combustion chamber C, and the like, as well known. The principle of determining whether the remaining combustion has occurred based on the heat release rate is as follows.

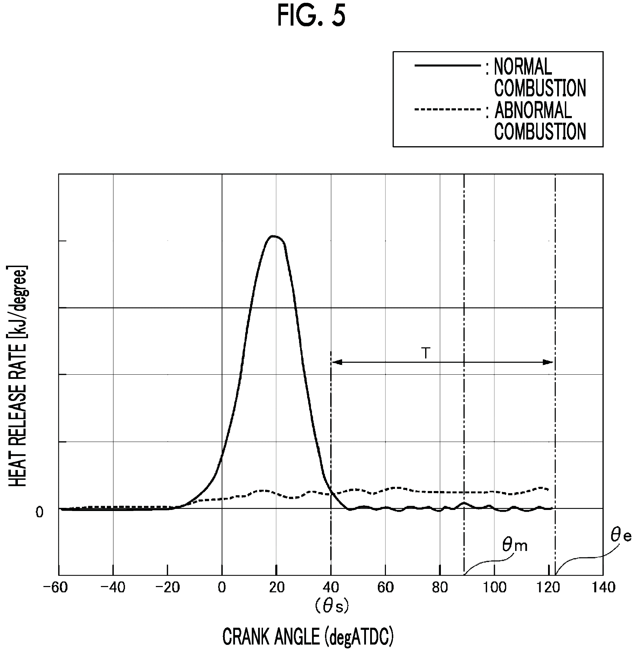

FIG. 5 is a schematic graph showing a temporal change in the heat release rate in the combustion chamber C in a case where the normal combustion has occurred and in a case where the abnormal combustion has occurred. A horizontal axis of the graph is an ATDC angle, θs indicates the end reference timing, and θe indicates the exhaust start timing at which the exhaust valve 14 opens the exhaust port 12.

As can be seen from the same graph, in a case where the normal combustion occurs during one combustion cycle E, the heat release rate peaks out before the end reference timing (θs), and is equal to 0 kJ or less than 0 kJ from the end reference timing to the exhaust start timing (θe). The heat release rate is less than 0 kJ because a slight heat dissipation occurs in the combustion chamber C from the end reference timing to the exhaust start timing. The end reference timing in the same graph is 40° ATDC, but as described above, the end reference timing is not limited to the crank angle.

On the other hand, in a case where the abnormal combustion occurs, the heat release rate does not cause a significant peak, and continues to have a value greater than 0 due to the continuation of the combustion from the end reference timing (θs) to the exhaust start timing (θe). Therefore, it is possible to determine whether the remaining combustion has occurred based on the heat release rate within the first specified period including the period from the end reference timing to the exhaust start timing (dimension T in FIG. 5).

As a more specific first example, in a case where the heat release rate at a single specified timing within the first specified period is a positive value, it can be determined that the remaining combustion has occurred. The specified timing may be any timing as long as it is within the first specified period, but is preferably a timing after the end reference timing to some extent. This is because, even when the normal combustion occurs, the actual timing at which the combustion ends for each combustion cycle E varies, and thus the heat release rate at the end reference timing can have a positive value.

Therefore, the single specified timing according to the first example is preferably after the intermediate timing (θm) after the end reference timing and before the exhaust start timing. In other words, the single specified timing is preferably a timing after the intermediate timing and before the exhaust start timing.

For example, the ATDC angle of the intermediate timing may be 20° ATDC or more larger than the end reference timing. Although only an example, the illustrated intermediate timing (θm) is 90° ATDC. In addition, the specified timing may coincide with the exhaust start timing. That is, in a case where the heat release rate at the exhaust start timing is a positive value, it may be determined that the remaining combustion has occurred.

As a more specific second example, the heat release rate may be acquired at each of a plurality of specified timings included in the first specified period, and it may be determined that the remaining combustion has occurred in a case where an average value of a plurality of heat release rates is a positive value.

The combustion monitoring apparatus 30A (30) according to the first embodiment illustrated in FIG. 4 includes some components based on the above-described determination principle. Specifically, the combustion monitoring apparatus 30A includes a pressure acquisition unit 31A (31) that acquires the in-cylinder pressure in the first specified period, and a heat release rate acquisition unit 32A (32) that acquires the heat release rate in the combustion chamber C in the first specified period based on the in-cylinder pressure acquired by the pressure acquisition unit 31A.

The pressure acquisition unit 31A acquires the in-cylinder pressure in the first specified period based on a measurement result of each of the crank sensor 9 and the pressure sensor 2. The pressure acquisition unit 31A may continuously acquire the in-cylinder pressure over the first specified period, or may acquire the in-cylinder pressure only when the specified timing in the first specified period arrives. The pressure acquisition unit 31A of the present example acquires the in-cylinder pressure at at least one specified timing after the intermediate timing (θm) and before the exhaust start timing (θe).

The heat release rate acquisition unit 32A calculates a specified heat release rate, which is the heat release rate at the specified timing, based on the in-cylinder pressure acquired by the pressure acquisition unit 31A and a known calculation expression. The heat release rate acquisition unit 32A may acquire the heat release rate over the first specified period, or may acquire the specified heat release rate only at the specified timing in the first specified period. The heat release rate acquisition unit 32A of the present example acquires the heat release rate at at least one specified timing after the intermediate timing (θm) and before the exhaust start timing (θe).

In a case where the first example described above is adopted, the at least one specified timing is a single timing, and the heat release rate acquisition unit 32A acquires the specified heat release rate at the single specified timing. On the other hand, in a case where the second example is adopted, the at least one specified timing is a plurality of timings, and the heat release rate acquisition unit 32A acquires an average value of a plurality of specified heat release rates corresponding to the plurality of specified timings, respectively.

The combustion prolongation determination unit 37A (37) according to the first embodiment determines whether the remaining combustion has occurred based on the in-cylinder pressure acquired by the pressure acquisition unit 31A, and more specifically, determines whether the remaining combustion has occurred based on the heat release rate acquired by the heat release rate acquisition unit 32A.

In the first example described above, in a case where the single specified heat release rate acquired by the heat release rate acquisition unit 32A is a positive value, the combustion prolongation determination unit 37A determines that the remaining combustion has occurred. In a case where the single specified heat release rate is 0 or less, the combustion prolongation determination unit 37A determines that the remaining combustion has not occurred. In the second example described above, in a case where the average value of the plurality of specified heat release rates acquired by the heat release rate acquisition unit 32A is a positive value, the combustion prolongation determination unit 37A determines that the remaining combustion has occurred. In a case where the average value of the specified heat release rates is 0 or less, the combustion prolongation determination unit 37A determines that the remaining combustion has not occurred.

According to the above configuration, the combustion prolongation determination unit 37A determines whether the remaining combustion has occurred based on the in-cylinder pressure acquired by the pressure acquisition unit 31A, and more specifically, based on the heat release rate acquired by the heat release rate acquisition unit 32A. The in-cylinder pressure used for the determination is determined from the pressure sensor 2 for measuring the in-cylinder pressure mounted in the related art. Therefore, it is possible to reduce the cost of the configuration for determining whether the remaining combustion has occurred. In addition, the heat release rate correlated with the in-cylinder pressure is a parameter that comprehensively indicates the combustion situation in the combustion chamber C. Therefore, the combustion prolongation determination unit 37A can accurately determine whether the remaining combustion has occurred by using the heat release rate. Therefore, the combustion monitoring apparatus 30A can accurately detect the precursor of the backfire.

In addition, since the heat release rate acquisition unit 32A acquires at least one specified heat release rate at an intermediate timing or later and before the exhaust start timing, even in a case where the actual end timing of the combustion varies when the normal combustion occurs, the specified heat release rate during the normal combustion is unlikely to have a positive value. Therefore, the combustion prolongation determination unit 37A can avoid erroneously determining that the remaining combustion has occurred when the normal combustion occurs.

In addition, in a case where the above-described specific first example is adopted, it is possible to determine whether the remaining combustion has occurred by simply determining whether the specified heat release rate at the single specified timing is a positive value. Therefore, the determination process executed by the combustion prolongation determination unit 37A can be simplified.

In addition, in a case where the above-described specific second example is adopted, even in a case where any of the plurality of specified heat release rates is accidentally a negative value due to, for example, a measurement error of the pressure sensor 2, it is possible to determine that the remaining combustion has occurred in a case where the average value is a positive value. Therefore, the combustion prolongation determination unit 37A can accurately determine whether the remaining combustion has occurred.

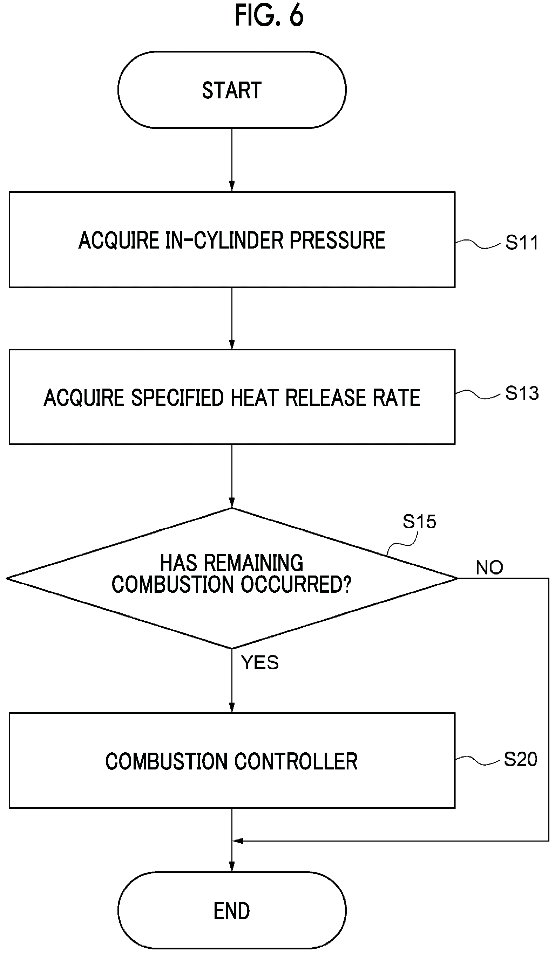

FIG. 6 is a flowchart showing a control process (combustion monitoring method) for determining the remaining combustion according to the first embodiment. The control process is executed by the processor of the combustion monitoring apparatus 30A (30) reading out a combustion monitoring program stored in the memory of the combustion monitoring apparatus 30A. In the following, a "step" may be abbreviated as "S".

First, the processor acquires the in-cylinder pressure in the first specified period based on the detection result of each of the pressure sensor 2 and the crank sensor 9 (S11). The processor that executes S11 is an example of the pressure acquisition unit 31A. Next, the processor acquires the specified heat release rate based on the in-cylinder pressure acquired in S11 (S13). The processor that executes S13 is an example of the heat release rate acquisition unit 32A.

Next, the processor determines whether the remaining combustion has occurred based on the specified heat release rate acquired in S13. The processor that executes S15 is an example of the combustion prolongation determination unit 37A. In a case where it is determined that the remaining combustion has not occurred (S15: NO), the processor ends the present control processing. In a case where it is determined that the remaining combustion has occurred (S15: YES), the processor executes control processing for reducing the in-cylinder temperature (S20). The processor that executes S20 is an example of the combustion controller 39. Thereafter, the processor ends the present control processing.

### <Second Embodiment>

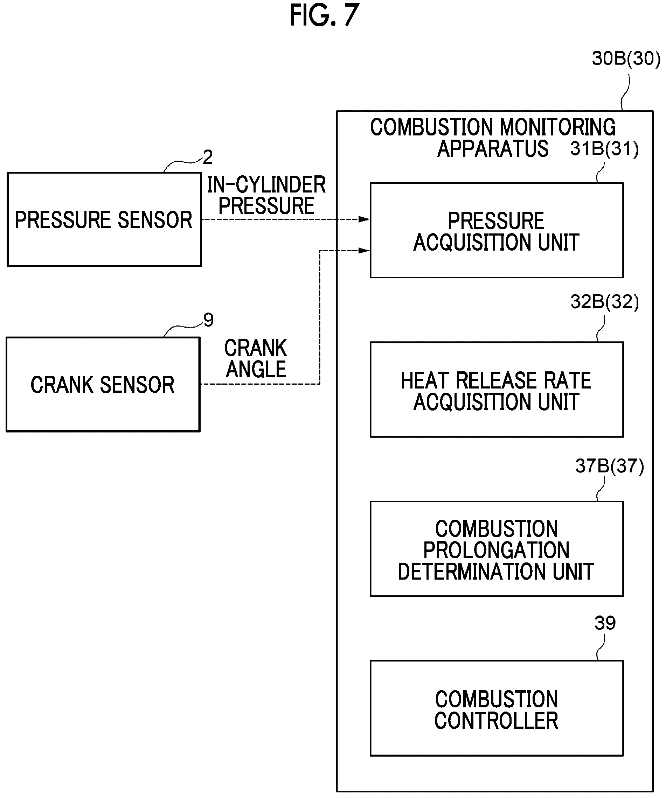

A combustion monitoring apparatus 30B (30) according to a second embodiment will be described with reference to FIGS. 7 to 9. In these drawings, the same reference numerals are given to the components described in the first embodiment, and the description thereof may be omitted or simplified below. In the second embodiment, the presence or absence of the remaining combustion is determined based on an integrated value of the heat release rate in the combustion chamber C specified by using the in-cylinder pressure. The integrated value of the heat release rate is a cumulative value of the heat release rate as an instantaneous value continuously acquired over a predetermined period. The principle of determining whether the remaining combustion has occurred based on the integrated value of the heat release rate is as follows.

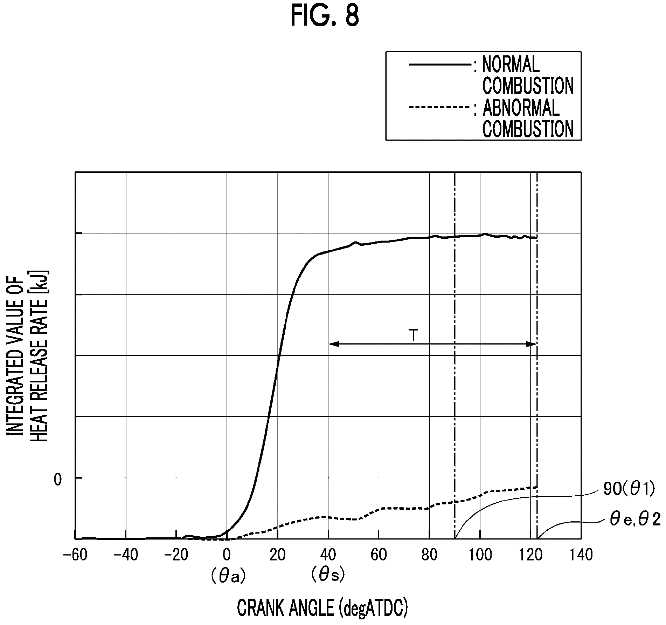

FIG. 8 is a schematic graph showing a temporal change in the integrated value of the heat release rate in the combustion chamber C in a case where the normal combustion has occurred and in a case where the abnormal combustion has occurred. A horizontal axis of the graph is an ATDC angle, θs indicates the end reference timing, and θe indicates the exhaust start timing. A dimension T in FIG. 8 has the same meaning as the dimension T in FIG. 5.

As can be seen from the same graph, in a case where the normal combustion occurs during one combustion cycle E, the integrated value of the heat release rate rapidly increases from 0° ATDC to the end reference timing (θs), and then remains constant or slightly decreases after approximately 90° ATDC. The integrated value of the heat release rate decreases because a slight heat dissipation occurs in the combustion chamber C after the normal combustion is completed.

On the other hand, in a case where the abnormal combustion occurs, the integrated value of the heat release rate continues to increase from 0° ATDC to the exhaust start timing (θe). This is because the combustion in the combustion chamber C continues in the above-described first specified period, and the heat generation due to the combustion continues to occur. Therefore, in the first specified period including the period indicated by the dimension T, in a case where the integrated value of the heat release rate from the first timing (θ1) after the end reference timing (θs) to the second timing (θ2) after the first timing and before the exhaust start timing is positive, it can be regarded that the remaining combustion has occurred. It should be noted that, although merely an example, the first timing (θ1) is 90° ATDC, and the second timing (θ2) is the exhaust start timing (θe). However, any timing within the first specified period may be adopted as the first timing and the second timing.

Various methods can be adopted to determine whether the integrated value of the heat release rate from the first timing to the second timing is positive. For example, the heat release rate from the first timing to the second timing may be acquired, and it may be determined whether the integrated value of the heat release rate is a positive value.

Alternatively, a first integrated value which is the integrated value of the heat release rate from a preliminary timing (θa) before the first timing to the first timing and a second integrated value which is the integrated value of the heat release rate from the preliminary timing to the second timing may be compared with each other. Specifically, it may be determined that the remaining combustion has occurred in a case where the following expression (1) is satisfied. $S 1 ≦ S 2 \times A$ (1)

In the expression (1), S1 is the first integrated value, S2 is the second integrated value, and A is a positive value of 1 or less. The value of A is preferably a positive value of less than 1, and is preferably, for example, 0.9 or more and less than 1.

The above-described preliminary timing is a timing after an intake end timing (θf in FIG. 2) at which the intake valve 13 closes the intake port 11 and before the first timing in one combustion cycle E. Although merely an example, the preliminary timing (θa) may be 0° ATDC.

The combustion monitoring apparatus 30B (30) according to the second embodiment illustrated in FIG. 7 includes some components based on the above-described determination principle. Specifically, the combustion monitoring apparatus 30B includes a pressure acquisition unit 31B (31), a heat release rate acquisition unit 32B (32), and a combustion prolongation determination unit 37B (37).

The pressure acquisition unit 31B acquires the in-cylinder pressure in the first specified period based on a measurement result of each of the crank sensor 9 and the pressure sensor 2. More specifically, the pressure acquisition unit 31B continuously acquires the in-cylinder pressure based on the measurement result of the pressure sensor 2 from the preliminary timing to the second timing. The pressure acquisition unit 31B associates the acquired in-cylinder pressure with the crank angle acquired from the measurement result of the crank sensor 9.

The heat release rate acquisition unit 32B acquires the first integrated value and the second integrated value based on the in-cylinder pressure and the crank angle acquired by the pressure acquisition unit 31B. The combustion prolongation determination unit 37B applies the first integrated value and the second integrated value acquired by the heat release rate acquisition unit 32B to the above-described expression (1). The combustion prolongation determination unit 37B determines that the remaining combustion has occurred in a case where the expression (1) is satisfied, and determines that the remaining combustion has not occurred in a case where the expression (1) is not satisfied.

The pressure acquisition unit 31B may acquire the in-cylinder pressure only from the first timing to the second timing. In this case, the heat release rate acquisition unit 32B directly acquires the integrated value of the heat release rate from the first timing to the second timing. In a case where the integrated value is a positive value, the combustion prolongation determination unit 37B determines that the remaining combustion has occurred.

As described above, in a case where the remaining combustion does not occur, the integrated value of the heat release rate decreases from the first timing to the second timing. Therefore, the expression (1) is not satisfied. On the other hand, in a case where the remaining combustion occurs, the integrated value of the heat release rate increases, and the expression (1) is satisfied. Therefore, according to the above-described configuration, the combustion prolongation determination unit 37B can accurately determine whether the remaining combustion has occurred based on the integrated value of the heat release rate.

The value of A in the expression (1) is preferably a positive value less than 1. This is because, even in a case where the heat release rate temporarily decreases due to an accidental factor such as a measurement error of the pressure sensor 2, the magnitude relationship between S1 and S2 × A does not change even though the remaining combustion occurs from the first timing to the second timing. As a result, it is possible to accurately determine that the remaining combustion has occurred.

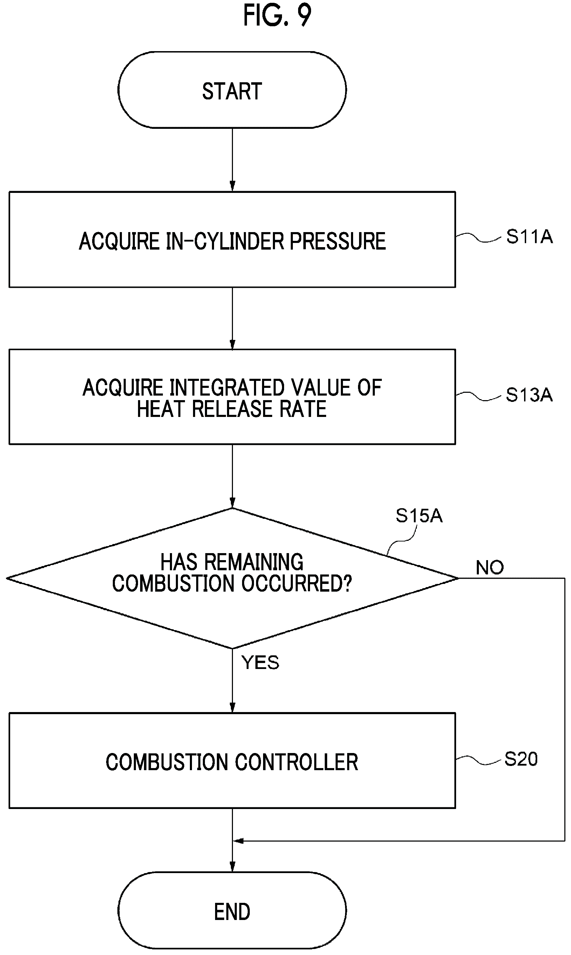

FIG. 9 is a flowchart showing a control process for determining the remaining combustion according to a second embodiment. Hereinafter, the description of the step overlapping with the control process (see FIG. 6) according to the first embodiment may be omitted.

The processor continuously acquires the in-cylinder pressure from the preliminary timing to the second timing based on the measurement results of the pressure sensor 2 and the crank sensor 9 (S11A). The processor that executes S11A is an example of the pressure acquisition unit 31B.

Next, the processor acquires a first integrated value and a second integrated value as integrated values of the heat release rate based on the in-cylinder pressure acquired in S11A (S13A). The processor that executes S13A is an example of the heat release rate acquisition unit 32B.

Next, the processor determines whether the remaining combustion has occurred by applying the first integrated value and the second integrated value acquired in S13A to the expression (1) (S15A). In a case where the expression (1) is not satisfied, the processor determines that the remaining combustion has not occurred (S15A: NO) and ends the present control processing. On the other hand, in a case where the expression (1) is satisfied, the processor determines that the remaining combustion has occurred (S15A: YES) and ends the present control processing after executing S20.

### <Third Embodiment>

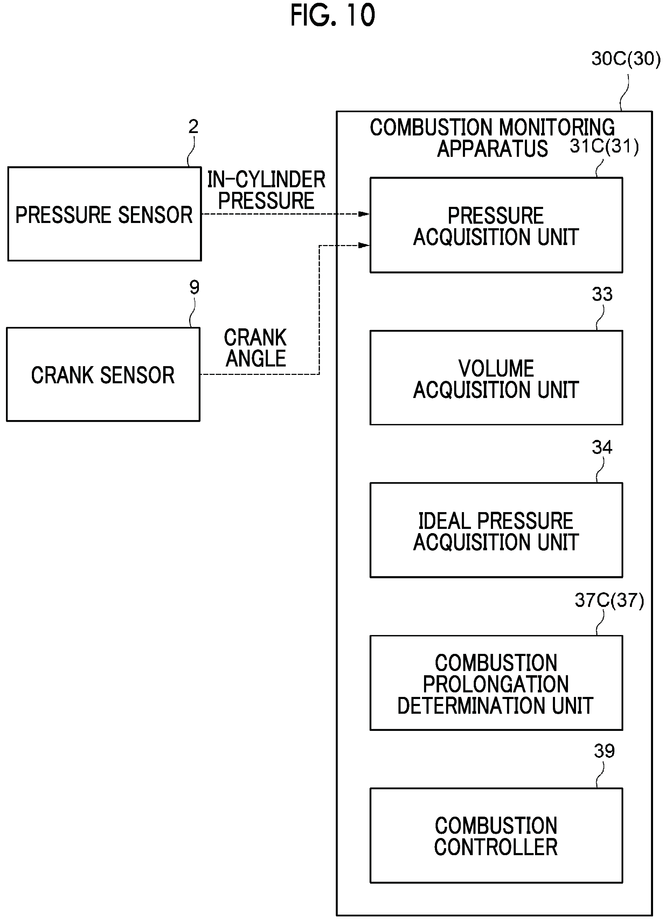

A combustion monitoring apparatus 30C (30) according to a third embodiment will be described with reference to FIGS. 10 to 12. In these drawings, the same reference numerals are given to the components described in the first embodiment, and the description thereof may be omitted or simplified below. In the third embodiment, the presence or absence of the remaining combustion is determined based on the in-cylinder pressure. The determination principle is as follows.

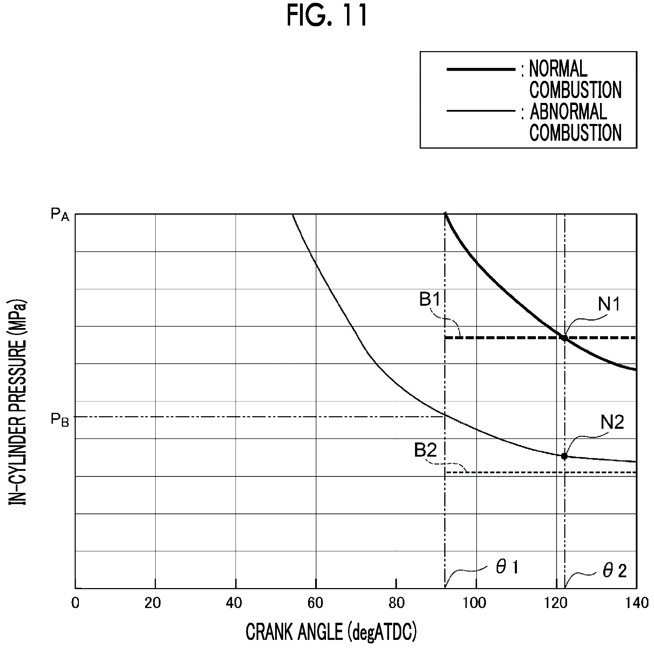

FIG. 11 is a schematic graph showing a temporal change in the in-cylinder pressure specified from the measurement result of the pressure sensor 2 in a case where the normal combustion has occurred and in a case where the abnormal combustion has occurred. A thick solid line indicates a change in the in-cylinder pressure (measured value) when the normal combustion has occurred, and a solid line having a normal thickness indicates a change in the in-cylinder pressure (measured value) when the abnormal combustion has occurred. A horizontal axis of the graph is an ATDC angle. θ1 indicates a first timing, and θ2 indicates a second timing. These timings are as described in the second embodiment. In the following description, the in-cylinder pressure as the measurement result at the first timing may be referred to as a "first in-cylinder pressure", and the in-cylinder pressure as the measurement result at the second timing may be referred to as a "second in-cylinder pressure".

Dashed lines B1 and B2 shown in the graph indicate an ideal pressure of the combustion chamber C expected to be confirmed as the measurement value at the second timing based on the first in-cylinder pressure. A thick dashed line B1 is an ideal pressure expected based on the first in-cylinder pressure (P_{A}) when the normal combustion has occurred. A dashed line B2 having a normal thickness is an ideal pressure expected based on the first in-cylinder pressure (P_{B}) when the abnormal combustion has occurred.

The ideal pressure is obtained by using the following expression (A). $Pi = {P}_{1} \times {\left({V}_{1}/{V}_{2}\right)}^{γ}$ (A)

In the expression (A), Pi is the ideal pressure, and the dashed lines B1 and B2 shown in the graph correspond to Pi. P1 is the first in-cylinder pressure, and corresponds to P_{A} and P_{B} described above. V₁ is a volume of the combustion chamber C at the first timing, and V₂ is a volume of the combustion chamber C at the second timing. V₁ is smaller than V₂. γ is a specific heat ratio of the combustion gas Bg. Hereinafter, V₁ and V₂ may be referred to as a "first volume" and a "second volume", respectively.

P₁ is measured by the pressure sensor 2, and V₁ and V₂ can be calculated by obtaining the vertical position of the piston 7 based on the crank angle. In the actual combustion stroke included in one combustion cycle E, since ideal adiabatic expansion does not occur, a correction may be appropriately added to the expression (A) in consideration of this point.

As can be seen from the same graph, in a case where the normal combustion has occurred, the second in-cylinder pressure (in-cylinder pressure corresponding to the point N1) obtained by the measurement substantially matches the ideal pressure (in-cylinder pressure corresponding to the dashed line B1) obtained based on the expression (A). On the other hand, in a case where the abnormal combustion has occurred, the second in-cylinder pressure (in-cylinder pressure corresponding to the point N2) obtained by the measurement is larger than the ideal pressure (in-cylinder pressure corresponding to the dashed line B2). This is because the heat generation associated with the combustion occurs even after the first timing, and the decrease in the in-cylinder pressure is suppressed by the heat generation even when the volume of the combustion chamber C increases.

Therefore, in a case where the following expression (2) is satisfied, it is possible to determine that the remaining combustion has occurred. $Pr > Pi \times B$ (2)

In the expression (2), Pr is the second in-cylinder pressure obtained by the measurement of the pressure sensor 2, Pi is as described above, and B is a value of 1 or more. The value of B is preferably a value larger than 1, and may be, for example, larger than 1 and 1.05 or less.

The combustion monitoring apparatus 30C (30) according to the third embodiment illustrated in FIG. 10 includes some components based on the above-described determination principle. Specifically, the combustion monitoring apparatus 30C includes a pressure acquisition unit 31C (31), a volume acquisition unit 33, an ideal pressure acquisition unit 34, and a combustion prolongation determination unit 37C (37).

The pressure acquisition unit 31C acquires the first in-cylinder pressure and the second in-cylinder pressure based on the measurement results of the pressure sensor 2 and the crank sensor 9. The volume acquisition unit 33 acquires the first volume and the second volume as fixed values stored in a memory (not illustrated) of the combustion monitoring apparatus 30C. The ideal pressure acquisition unit 34 acquires the ideal pressure (Pi) by applying the first volume and the second volume specified by the volume acquisition unit 33 and the first in-cylinder pressure specified by the pressure acquisition unit 31C to the expression (A).

The combustion prolongation determination unit 37C determines that the remaining combustion has occurred in a case where the expression (2) is satisfied for the second in-cylinder pressure (Pr) as the measurement value acquired by the pressure acquisition unit 31C and the ideal pressure (Pi) acquired by the ideal pressure acquisition unit 34. In a case where the expression (2) is not satisfied, the combustion prolongation determination unit 37C determines that the remaining combustion has not occurred.

In a case where the normal combustion occurs, the combustion gas Bg changes close to the adiabatic expansion from the first timing to the second timing, and thus Pr substantially matches Pi. Therefore, the expression (2) is not satisfied. On the other hand, in a case where the remaining combustion occurs, heat is generated in the combustion chamber C between both timings, and thus Pr is higher than Pi, and the expression (2) is satisfied. Therefore, according to the above-described configuration, the combustion prolongation determination unit 37C can determine whether the remaining combustion has occurred. In the embodiment in which the value of B is a value larger than 1, even in a case where Pr is slightly larger than Pi due to the measurement error of the pressure sensor 2 or the like, the magnitude relationship between Pr and Pi × B does not change even though the remaining combustion does not occur. Therefore, it is possible to avoid erroneously determining that the remaining combustion has occurred.

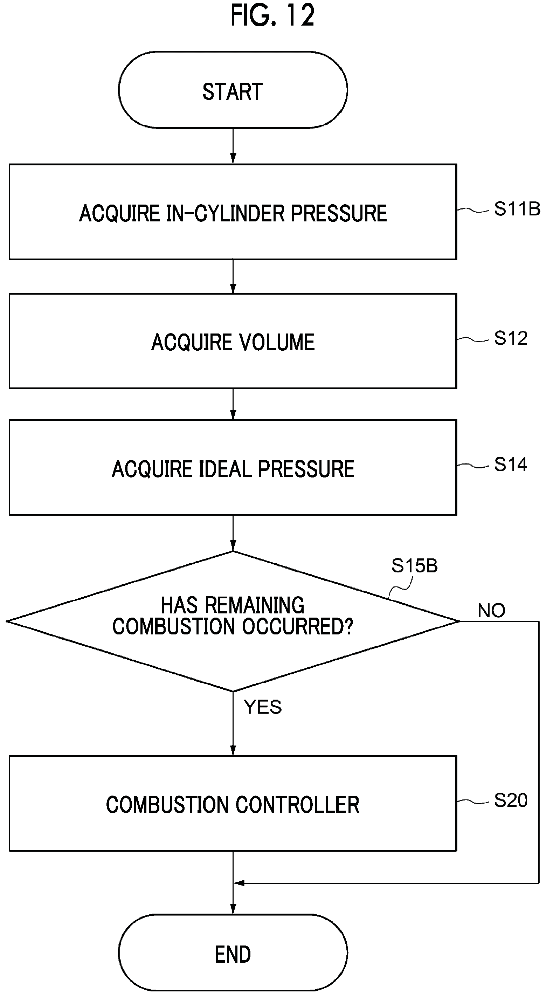

FIG. 12 is a flowchart showing control processing for determining the remaining combustion according to the third embodiment. Hereinafter, the description of the step overlapping with the control process (see FIG. 6) according to the first embodiment may be omitted.

The processor acquires the first in-cylinder pressure and the second in-cylinder pressure based on the measurement results of the pressure sensor 2 and the crank sensor 9 (S11B). The processor that executes S11B is an example of the pressure acquisition unit 31C. Next, the processor acquires the first volume and the second volume (S12). The processor that executes S12 is an example of the volume acquisition unit 33. Next, the processor acquires the ideal pressure based on the first in-cylinder pressure acquired in S11B and the first volume and the second volume acquired in S12 (S14). The processor that executes S14 is an example of the ideal pressure acquisition unit 34. Next, the processor determines whether the remaining combustion has occurred based on the second in-cylinder pressure acquired in S11B and the ideal pressure acquired in S14 (S15B). In a case where the expression (2) is not satisfied, the processor determines that the remaining combustion has not occurred (S15B: NO). On the other hand, in a case where the expression (2) is satisfied, the processor determines that the remaining combustion has occurred (S15B: YES). The processor that executes S15B is an example of the combustion prolongation determination unit 37C.

### <Fourth Embodiment>

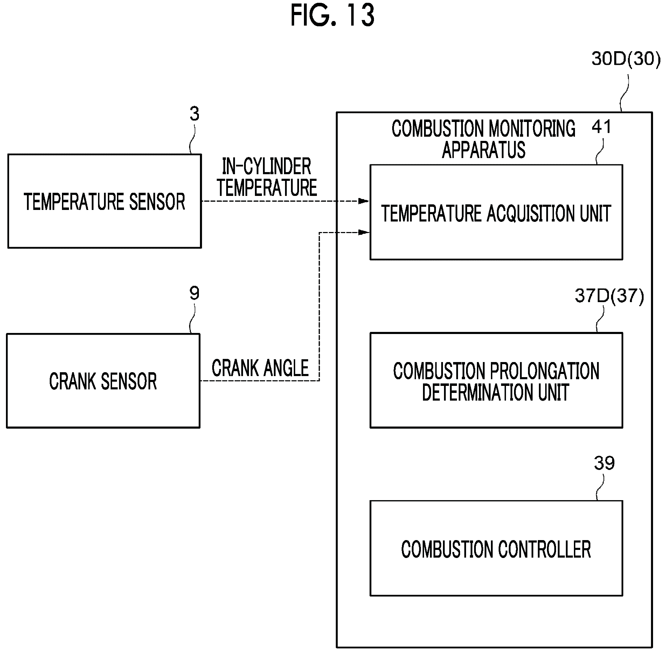

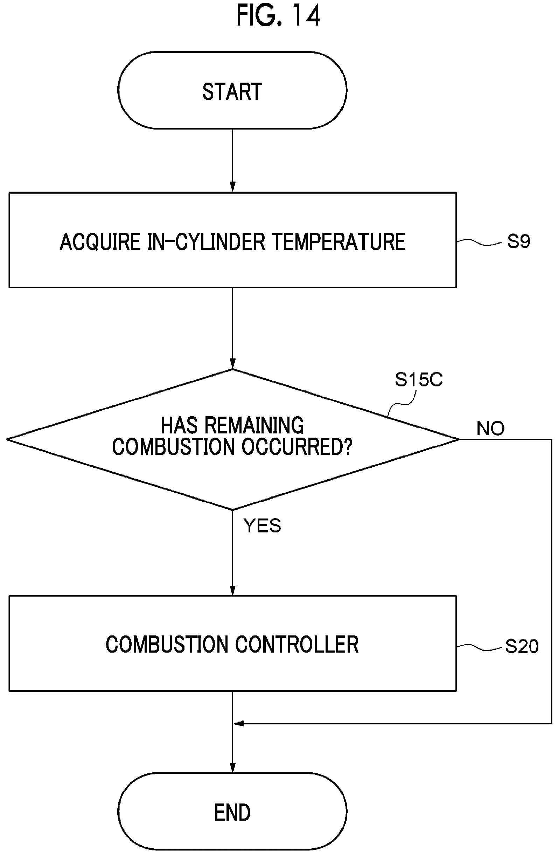

A combustion monitoring apparatus 30D (30) according to a fourth embodiment will be described with reference to FIGS. 13 and 14. In these drawings, the same reference numerals are given to the components described in the first embodiment, and the description thereof may be omitted or simplified below. In the fourth embodiment, the presence or absence of the remaining combustion is determined based on the temperature of the combustion chamber C (hereinafter, may be referred to as an "in-cylinder temperature"). In a case where the remaining combustion occurs, the in-cylinder temperature after the end reference timing is higher than the in-cylinder temperature in a case where the normal combustion occurs, and thus the presence or absence of the remaining combustion can be determined.

As shown in FIG. 13, the combustion monitoring apparatus 30D (30) includes a temperature acquisition unit 41 and a combustion prolongation determination unit 37D (37). The temperature acquisition unit 41 acquires the in-cylinder temperature in a second specified period including a period from the end reference timing to an intake start timing at which the intake valve 13 opens the intake port 11. Here, in a case where the end reference timing is included in one combustion cycle E in FIG. 2, the intake start timing is a timing that arrives after the exhaust stroke shown in FIG. 2. In the measurement of the in-cylinder temperature, a non-contact type temperature sensor 3 provided in the engine 1 is used. The temperature sensor 3 may be a thermographic camera configured to measure a temperature of an outer surface of the cylinder 6. In this case, the temperature of the outer surface is regarded as the in-cylinder temperature. Alternatively, in a case where an observation window is provided in a side wall of the cylinder 6, the thermographic camera can more directly measure the in-cylinder temperature. The temperature acquisition unit 41 determines whether a measurement timing of the temperature has arrived, based on a measurement result of the crank sensor 9.

The combustion prolongation determination unit 37D determines that the remaining combustion has occurred in a case where the temperature acquired by the temperature acquisition unit 41 exceeds a temperature threshold. The temperature threshold is a fixed value stored in a memory of the combustion monitoring apparatus 30D. In a case where the acquired temperature is equal to or lower than the temperature threshold, the combustion prolongation determination unit 37D determines that the remaining combustion has not occurred. In a case where the remaining combustion has occurred, the temperature at the predetermined timing within the second specified period exceeds the temperature threshold. Therefore, the combustion prolongation determination unit 37D can determine whether the remaining combustion has occurred.

FIG. 14 is a flowchart showing control processing for determining the remaining combustion according to the fourth embodiment. Hereinafter, the description of the step overlapping with the control process (see FIG. 6) according to the first embodiment may be omitted.

The processor acquires the in-cylinder temperature at a predetermined timing within the second specified period (S9). The processor that executes S9 is an example of the temperature acquisition unit 41. Next, the processor determines whether the remaining combustion has occurred (S15C). The processor that executes S15C is an example of the combustion prolongation determination unit 37D.

### <Fifth Embodiment>

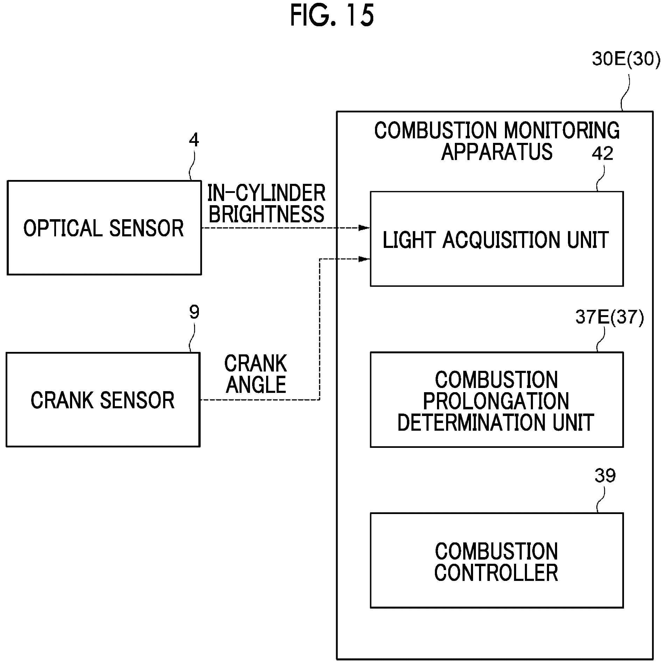

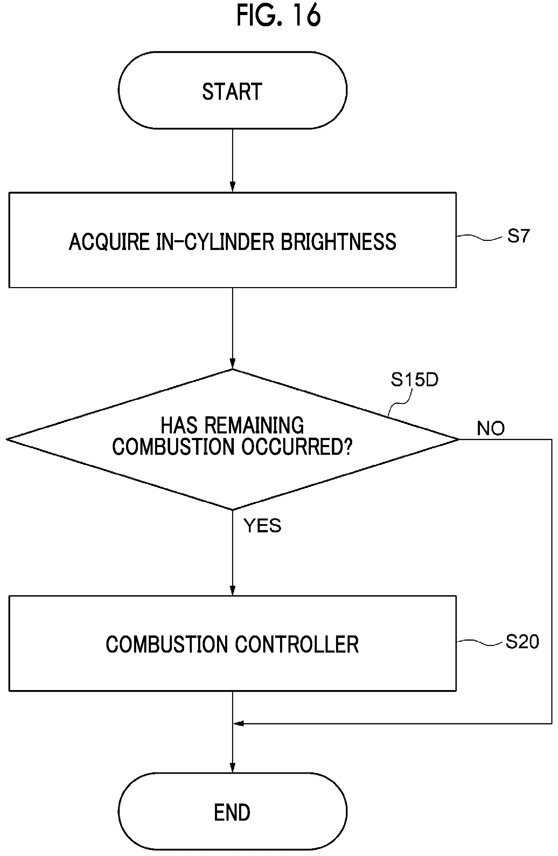

A combustion monitoring apparatus 30E (30) according to a fifth embodiment will be described with reference to FIGS. 15 and 16. In these drawings, the same reference numerals are given to the components described in the first embodiment, and the description thereof may be omitted or simplified below. In the fifth embodiment, the presence or absence of the remaining combustion is determined based on the brightness of the combustion chamber C (hereinafter, may be referred to as an "in-cylinder brightness"). In a case where the remaining combustion occurs, the in-cylinder brightness after the end reference timing is higher than the in-cylinder brightness in a case where the normal combustion occurs, and thus the presence or absence of the remaining combustion can be determined.

As illustrated in FIG. 15, the combustion monitoring apparatus 30E (30) includes a light acquisition unit 42 and a combustion prolongation determination unit 37E. The light acquisition unit 42 acquires the in-cylinder brightness in the second specified period described above. In the measurement of the in-cylinder brightness, an optical sensor 4 provided in the engine 1 is used. For example, the optical sensor 4 is a camera, and images the combustion chamber C through an observation window disposed on a side wall portion of the cylinder 6. Accordingly, the brightness (for example, luminance) of the combustion chamber C is measured. The optical sensor 4 determines whether the measurement timing of the in-cylinder brightness has arrived, based on a detection result of the crank sensor 9.

The combustion prolongation determination unit 37E determines that the remaining combustion has occurred in a case where the in-cylinder brightness acquired by the light acquisition unit 42 exceeds a light threshold. The light threshold is a fixed value stored in a memory of the combustion monitoring apparatus 30E. In a case where the acquired in-cylinder brightness is equal to or less than the light threshold, the combustion prolongation determination unit 37E determines that the remaining combustion has not occurred. In a case where the remaining combustion occurs, the in-cylinder brightness at the predetermined timing within the second specified period exceeds the light threshold. Therefore, the combustion prolongation determination unit 37E can determine whether the remaining combustion has occurred.

FIG. 16 is a flowchart showing control processing for determining the remaining combustion according to the fifth embodiment. Hereinafter, the description of the step overlapping with the control process (see FIG. 6) according to the first embodiment may be omitted.

The processor acquires the in-cylinder brightness at a predetermined timing within the second specified period (S7). The processor that executes S7 is an example of the light acquisition unit 42. Next, the processor determines whether the remaining combustion has occurred based on the in-cylinder brightness acquired in S7 (S15D). The processor that executes S15D is an example of the combustion prolongation determination unit 37E.

### <Others>

The combustion monitoring apparatuses 30A, 30B, 30C, 30D, and 30E (30) described above are configured by a computer, and include a processor, a memory (storage medium), and an external communication interface. The processor is a CPU, a GPU, an MPU, a DSP, or a combination thereof. A processor according to another embodiment may be implemented by an integrated circuit such as a PLD, an ASIC, an FPGA, or an MCU. The memory is configured to temporarily or non-temporarily store various types of data and is implemented by, for example, at least one of a RAM, a ROM, and a flash memory. The processor executes various control processes according to instructions of a program loaded into the memory.

In the first to fifth embodiments described above, it is determined whether the remaining combustion has occurred based on a specific value of any one of the in-cylinder pressure, the in-cylinder temperature, or the in-cylinder brightness. In another embodiment, the presence or absence of the remaining combustion may be determined by combining these characteristic values. For example, in a case where the specified heat release rate at the specified timing is a positive value and the in-cylinder temperature within the second specified period exceeds the temperature threshold, it may be determined that the remaining combustion has occurred.

### <Summary>

For example, the content described in some embodiments described above is understood as follows.
1) A combustion monitoring apparatus (30) according to at least one embodiment of the present disclosure is a combustion monitoring apparatus for monitoring combustion of a fuel including a hydrogen fuel, which is periodically repeated in a combustion chamber (C) of an engine (1), the combustion monitoring apparatus including:
   a combustion prolongation determination unit (37) that determines, based on at least one of a pressure, a temperature, or a brightness in the combustion chamber, whether remaining combustion has occurred in which the combustion continues even after an end reference timing (θs) set for ending the combustion during one combustion cycle has arrived.
   The inventors have found that, in a case where the remaining combustion occurs during one combustion cycle (E), the hydrogen fuel flowing into the combustion chamber in the intake stroke of the next one combustion cycle may start combustion before the ignition operation of the engine. In a case where the hydrogen fuel starts combustion in the intake stroke, backfire may occur. That is, the inventors have specified that the remaining combustion is a phenomenon that may induce the backfire. In a case where the remaining combustion occurs, the pressure, the temperature, and the brightness in the combustion chamber all have high values. Therefore, it is possible to determine whether the remaining combustion has occurred based on at least one of these characteristic values. Therefore, according to the configuration of 1), the combustion prolongation determination unit determines whether the remaining combustion has occurred. Therefore, a combustion monitoring apparatus capable of accurately detecting a sign of the backfire is realized.
2) In some embodiments, in the combustion monitoring apparatus according to 1),
   the engine includes
   a cylinder (6), a piston (7), and a cylinder head (5) that define the combustion chamber,
   an intake valve (13) that is configured to open and close an intake port (11) provided in the cylinder head and that allows the fuel to be taken into the combustion chamber by opening the intake port, and
   an exhaust valve (14) that is configured to open and close an exhaust port (12) provided in the cylinder head and that allows a combustion gas generated by the combustion to be discharged from the combustion chamber by opening the exhaust port,
   the combustion monitoring apparatus further includes a pressure acquisition unit (31) that acquires the pressure in a first specified period including a period (dimension T) from the end reference timing to an exhaust start timing (θe) at which the exhaust valve opens the exhaust port, and
   the combustion prolongation determination unit is configured to determine whether the remaining combustion has occurred based on the acquired pressure.
   According to the configuration of 2), it is possible to determine whether the remaining combustion has occurred based on a measurement result of a pressure sensor that has been mounted in the related art and that measures the pressure of the combustion chamber. Therefore, it is possible to reduce the cost of the configuration for determining whether the remaining combustion has occurred.
3) In some embodiments, the combustion monitoring apparatus according to 2) further includes
   a heat release rate acquisition unit (32) that acquires a heat release rate in the combustion chamber in the first specified period based on the acquired pressure,
   in which the combustion prolongation determination unit is configured to determine whether the remaining combustion has occurred based on the acquired heat release rate.
   According to the configuration of 3), since the heat release rate correlated with the pressure of the combustion chamber is a parameter that comprehensively indicates the combustion situation in the combustion chamber, the combustion prolongation determination unit can accurately determine whether the remaining combustion has occurred. Therefore, the combustion monitoring apparatus can accurately detect a precursor of the backfire.
4) In some embodiments, in the combustion monitoring apparatus according to 3),
   the first specified period includes an intermediate timing (θm) after the end reference timing and before the exhaust start timing, and
   the heat release rate acquisition unit is configured to acquire a specified heat release rate that is the heat release rate at at least one specified timing after the intermediate timing and before the exhaust start timing.
   According to the configuration of 4), since the specified heat release rate is the heat release rate after the intermediate timing, even in a case where the actual timing at which the normal combustion ends varies, the specified heat release rate is unlikely to have a positive value. Therefore, the combustion prolongation determination unit can avoid erroneously determining that the remaining combustion has occurred when the normal combustion occurs.
5) In some embodiments, in the combustion monitoring apparatus according to 4),
   the at least one specified timing is a single specified timing, and
   the combustion prolongation determination unit is configured to determine that the remaining combustion has occurred in a case where the specified heat release rate is a positive value.
   According to the configuration of 5), it is possible to determine whether the remaining combustion has occurred by determining whether the specified heat release rate at the single specified timing is a positive value. Therefore, the determination process executed by the combustion prolongation determination unit can be simplified.
6) In some embodiments, in the combustion monitoring apparatus according to 4),
   the at least one specified timing is a plurality of the specified timings,
   the heat release rate acquisition unit is configured to acquire a plurality of the specified heat release rates corresponding to the plurality of specified timings, respectively, and
   the combustion prolongation determination unit is configured to determine that the remaining combustion has occurred in a case where an average value of the plurality of specified heat release rates is a positive value.
   According to the configuration of 6), even in a case where any specified heat release rate is accidentally a negative value when the remaining combustion occurs, it can be determined that the remaining combustion has occurred in a case where the average value of the plurality of specified heat release rates is a positive value. Therefore, the combustion prolongation determination unit can accurately determine whether the remaining combustion has occurred.
7) In some embodiments, in the combustion monitoring apparatus according to 3),
   the first specified period includes
   a first timing after the end reference timing and
   a second timing after the first timing and before the exhaust start timing,
   the heat release rate acquisition unit is configured to continuously acquire the heat release rate from the first timing to the second timing, and
   the combustion prolongation determination unit is configured to determine that the remaining combustion has occurred in a case where an integrated value of the heat release rate from the first timing to the second timing is a positive value.
   In a case where the remaining combustion does not occur, the integrated value of the heat release rate decreases from the first timing to the second timing. On the other hand, in a case where the remaining combustion occurs, the integrated value of the heat release rate increases. Therefore, according to the configuration of 7), the combustion prolongation determination unit can accurately determine whether the remaining combustion has occurred based on the integrated value of the heat release rate.
8) In some embodiments, in the combustion monitoring apparatus according to 7),
   the first specified period further includes a preliminary timing (θa) after an intake end timing (θf) at which the intake valve closes the intake port and before the first timing,
   the heat release rate acquisition unit is configured to continuously acquire the heat release rate from the preliminary timing to the second timing, and
   the combustion prolongation determination unit is configured to determine that the remaining combustion has occurred in a case where the following expression (1) is satisfied,
   where a first integrated value which is the integrated value from the preliminary timing to the first timing is defined as S1, a second integrated value which is the integrated value from the preliminary timing to the second timing is defined as S2, and a positive value of 1 or less is defined as A. $S 1 ≦ S 2 \times A$ (1)
   In a case where the heat release rate increases from the first timing to the second timing, the expression (1) is satisfied. Therefore, the combustion prolongation determination unit can accurately determine whether the remaining combustion has occurred based on the first integrated value and the second integrated value. In a case where the value of A is a positive value less than 1, even in a case where the heat release rate temporarily decreases due to an accidental factor despite the occurrence of the remaining combustion from the first timing to the second timing, the magnitude relationship between S1 and S2 × A does not change. Therefore, it is possible to accurately determine that the remaining combustion has occurred.
9) In some embodiments, in the combustion monitoring apparatus according to 2),
   the engine further includes a crankshaft (8) connected to the piston,
   the first specified period includes
   a first timing after the end reference timing and
   a second timing after the first timing and before the exhaust start timing,
   the pressure acquisition unit is configured to acquire a first pressure (first in-cylinder pressure; P_{A}, P_{B}) and a second pressure (second in-cylinder pressure) which are the pressures at the first timing and the second timing,
   the combustion monitoring apparatus further includes an ideal pressure acquisition unit (34) that acquires an ideal pressure which is the pressure at the second timing in a case where the remaining combustion has not occurred between the first timing and the second timing, based on a first volume (V₁) and a second volume (V₂) which are volumes of the combustion chamber at the first timing and the second timing and the first pressure, and the combustion prolongation determination unit is configured to determine that the remaining combustion has occurred in a case where the following expression (2) is satisfied,
   where the second pressure is defined as Pr, the ideal pressure is defined as Pi, and a value of 1 or more is defined as B. $Pr > Pi \times B$ (2)
   In a case where the normal combustion occurs, the combustion gas changes close to the adiabatic expansion from the first timing to the second timing, and thus Pr substantially matches Pi. Therefore, the expression (2) is not satisfied. On the other hand, in a case where the remaining combustion occurs, heat is generated in the combustion chamber between both timings, and thus Pr is higher than Pi, and the expression (2) is satisfied. Therefore, according to the configuration of 9), the combustion prolongation determination unit can determine whether the remaining combustion has occurred. In the embodiment in which the value of B is a value larger than 1, even in a case where Pr is slightly larger than Pi due to a measurement error or the like, the expression (2) is not satisfied, although the remaining combustion does not occur. Therefore, it is possible to avoid erroneously determining that the remaining combustion has occurred.
10) In some embodiments, in the combustion monitoring apparatus according to 1),
   the engine includes
   a cylinder (6), a piston (7), and a cylinder head (5) that define the combustion chamber,
   an intake valve (13) that is configured to open and close an intake port (11) provided in the cylinder head and that allows the fuel to be taken into the combustion chamber by opening the intake port, and
   an exhaust valve (14) that is configured to open and close an exhaust port (12) provided in the cylinder head and that allows a combustion gas generated by the combustion to be discharged from the combustion chamber by opening the exhaust port,
   the combustion monitoring apparatus further includes a temperature acquisition unit (41) that acquires the temperature in a second specified period including a period from the end reference timing to an intake start timing at which the intake valve opens the intake port, and
   the combustion prolongation determination unit is configured to determine whether the remaining combustion has occurred in a case where the acquired temperature exceeds a temperature threshold.
   According to the configuration of 10), in a case where the remaining combustion occurs, the temperature at a predetermined timing in the second specified period exceeds the temperature threshold. Therefore, the combustion prolongation determination unit can determine whether the remaining combustion has occurred.
11) In some embodiments, in the combustion monitoring apparatus according to 10),
   the engine includes
   a cylinder (6), a piston (7), and a cylinder head (5) that define the combustion chamber,
   an intake valve (13) that is configured to open and close an intake port (11) provided in the cylinder head and that allows the fuel to be taken into the combustion chamber by opening the intake port, and
   an exhaust valve (14) that is configured to open and close an exhaust port (12) provided in the cylinder head and that allows a combustion gas generated by the combustion to be discharged from the combustion chamber by opening the exhaust port,
   the combustion monitoring apparatus further includes a light acquisition unit (42) that acquires the brightness in a second specified period including a period from the end reference timing to an intake start timing at which the intake valve opens the intake port, and
   the combustion prolongation determination unit is configured to determine that the remaining combustion has occurred in a case where the acquired brightness exceeds a light threshold.
   According to the configuration of 11), in a case where the remaining combustion occurs, the brightness at a predetermined timing in the second specified period exceeds the light threshold. Since this phenomenon can be confirmed as soon as the remaining combustion occurs, it is possible to determine whether the remaining combustion has occurred at an early timing. Therefore, it is also possible to secure sufficient time for changing the control, such as changing the way of the fuel injection, in the next one combustion cycle.
12) In some embodiments, the combustion monitoring apparatus according to any one of 1) to 11) further includes
   a combustion controller (39) that is configured to execute control for lowering the temperature in the combustion chamber in a case where it is determined that the remaining combustion has occurred.
   According to the configuration of 12), in a case where the combustion prolongation determination unit determines that the remaining combustion has occurred, the temperature of the combustion chamber in the next one combustion cycle is lowered, so that the occurrence of the backfire in the next one combustion cycle can be suppressed.
13) In some embodiments, in the combustion monitoring apparatus according to 12),
   the engine further includes a fuel injection device (15) that injects the fuel to be supplied to the combustion chamber, and
   the combustion controller is configured to control the fuel injection device such that at least one of retardation of a fuel injection timing in a next one combustion cycle or a decrease in a fuel injection amount in the next one combustion cycle occurs.
   According to the configuration of 13), in the next one combustion cycle, the retardation of the fuel injection timing or the decrease in the fuel injection amount occurs, so that the backfire in the next one combustion cycle can be suppressed.
14) In some embodiments, in the combustion monitoring apparatus according to 13),
   the combustion controller is configured to control the fuel injection device such that, in a case where it is determined that the remaining combustion has occurred, the fuel injection timing is retarded while maintaining the fuel injection amount in the next one combustion cycle as compared with the one combustion cycle in which the remaining combustion has occurred.
   According to the configuration of 14), the occurrence of the backfire can be suppressed by the retardation of the fuel injection timing. In addition, since the fuel injection amount is maintained, it is also possible to suppress a decrease in the output of the engine in the next one combustion cycle. Therefore, it is possible to stabilize the output of the engine.
15) A combustion monitoring method according to at least one embodiment of the present disclosure is a combustion monitoring method for monitoring combustion of a fuel including a hydrogen fuel, which is periodically repeated in a combustion chamber (C) of an engine (1), the combustion monitoring method including:
   determining, based on at least one of a pressure, a temperature, or a brightness in the combustion chamber, whether remaining combustion in which the combustion continues even after an end reference timing (θs) set for ending the combustion during one combustion cycle has arrived.
   According to the configuration of 15), the same technical advantages as those of 1) can be obtained.
16) In some embodiments, the combustion monitoring program according to the above 15) is a combustion monitoring program for monitoring combustion of a fuel including a hydrogen fuel, which is periodically repeated in a combustion chamber (C) of an engine (1),
   the combustion monitoring program causing a computer to
   determine, based on at least one of a pressure, a temperature, or a brightness in the combustion chamber, whether remaining combustion in which the combustion continues even after an end reference timing (θs) at which the combustion should end in one combustion cycle has arrived has occurred.

According to the configuration of 16), the same technical advantages as those of 1) can be obtained.

### Reference Signs List

1: engine
2: pressure sensor
3: temperature sensor
4: optical sensor
5: cylinder head
6: cylinder
7: piston
8: crankshaft
9: crank sensor
11: intake port
12: exhaust port
13: intake valve
14: exhaust valve
15: fuel injection device
17: intake passage
18: exhaust passage
19: ignition device
21: connecting rod
30A to 30E (30): combustion monitoring apparatus
31A to 31C (31): pressure acquisition unit
32A, 32B (32): heat release rate acquisition unit
33: volume acquisition unit
34: ideal pressure acquisition unit
37A to 37E (37): combustion prolongation determination unit
39: combustion controller
41: temperature acquisition unit
42: light acquisition unit
B1, B2: dashed line
Bg: combustion gas
C: combustion chamber
E: one combustion cycle
F: arrow
P_{A}, P_{B}: first in-cylinder pressure
T: dimension
V₁: first volume
V₂: second volume
θa: preliminary timing
θe: exhaust start timing
θf: intake end timing
θm: intermediate timing
θs: end reference timing

## Claims

1. A combustion monitoring apparatus for monitoring combustion of a fuel including a hydrogen fuel, which is periodically repeated in a combustion chamber of an engine, the combustion monitoring apparatus comprising:
a combustion prolongation determination unit that determines, based on at least one of a pressure, a temperature, or a brightness in the combustion chamber, whether remaining combustion has occurred in which the combustion continues even after an end reference timing set for ending the combustion during one combustion cycle has arrived.

2. The combustion monitoring apparatus according to Claim 1,
wherein the engine includes
a cylinder, a piston, and a cylinder head that define the combustion chamber,
an intake valve that is configured to open and close an intake port provided in the cylinder head and that allows the fuel to be taken into the combustion chamber by opening the intake port, and
an exhaust valve that is configured to open and close an exhaust port provided in the cylinder head and that allows a combustion gas generated by the combustion to be discharged from the combustion chamber by opening the exhaust port,
the combustion monitoring apparatus further comprises a pressure acquisition unit that acquires the pressure in a first specified period including a period from the end reference timing to an exhaust start timing at which the exhaust valve opens the exhaust port, and
the combustion prolongation determination unit is configured to determine whether the remaining combustion has occurred based on the acquired pressure.

3. The combustion monitoring apparatus according to Claim 2, further comprising:
a heat release rate acquisition unit that acquires a heat release rate in the combustion chamber in the first specified period based on the acquired pressure,
wherein the combustion prolongation determination unit is configured to determine whether the remaining combustion has occurred based on the acquired heat release rate.

4. The combustion monitoring apparatus according to Claim 3,
wherein the first specified period includes an intermediate timing after the end reference timing and before the exhaust start timing, and
the heat release rate acquisition unit is configured to acquire a specified heat release rate that is the heat release rate at at least one specified timing after the intermediate timing and before the exhaust start timing.

5. The combustion monitoring apparatus according to Claim 4,
wherein the at least one specified timing is a single specified timing, and
the combustion prolongation determination unit is configured to determine that the remaining combustion has occurred in a case where the specified heat release rate is a positive value.

6. The combustion monitoring apparatus according to Claim 4,
wherein the at least one specified timing is a plurality of the specified timings,
the heat release rate acquisition unit is configured to acquire a plurality of the specified heat release rates corresponding to the plurality of specified timings, respectively, and
the combustion prolongation determination unit is configured to determine that the remaining combustion has occurred in a case where an average value of the plurality of specified heat release rates is a positive value.

7. The combustion monitoring apparatus according to Claim 3,
wherein the first specified period includes
a first timing after the end reference timing and
a second timing after the first timing and before the exhaust start timing,
the heat release rate acquisition unit is configured to continuously acquire the heat release rate from the first timing to the second timing, and
the combustion prolongation determination unit is configured to determine that the remaining combustion has occurred in a case where an integrated value of the heat release rate from the first timing to the second timing is a positive value.

8. The combustion monitoring apparatus according to Claim 7,
wherein the first specified period further includes a preliminary timing after an intake end timing at which the intake valve closes the intake port and before the first timing,
the heat release rate acquisition unit is configured to continuously acquire the heat release rate from the preliminary timing to the second timing, and
the combustion prolongation determination unit is configured to determine that the remaining combustion has occurred in a case where the following expression (1) is satisfied,
where a first integrated value which is the integrated value from the preliminary timing to the first timing is defined as S1, a second integrated value which is the integrated value from the preliminary timing to the second timing is defined as S2, and a positive value of 1 or less is defined as A. $S 1 ≦ S 2 \times A$ (1)

9. The combustion monitoring apparatus according to Claim 2,
wherein the engine further includes a crankshaft connected to the piston,
the first specified period includes
a first timing after the end reference timing and
a second timing after the first timing and before the exhaust start timing,
the pressure acquisition unit is configured to acquire a first pressure and a second pressure which are the pressures at the first timing and the second timing,
the combustion monitoring apparatus further comprises an ideal pressure acquisition unit that acquires an ideal pressure which is the pressure at the second timing in a case where the remaining combustion has not occurred between the first timing and the second timing, based on a first volume and a second volume which are volumes of the combustion chamber at the first timing and the second timing and the first pressure, and
the combustion prolongation determination unit is configured to determine that the remaining combustion has occurred in a case where the following expression (2) is satisfied,
where the second pressure is defined as Pr, the ideal pressure is defined as Pi, and a value of 1 or more is defined as B. $Pr > Pi \times B$ (2)

10. The combustion monitoring apparatus according to Claim 1,
wherein the engine includes
a cylinder, a piston, and a cylinder head that define the combustion chamber,
an intake valve that is configured to open and close an intake port provided in the cylinder head and that allows the fuel to be taken into the combustion chamber by opening the intake port, and
an exhaust valve that is configured to open and close an exhaust port provided in the cylinder head and that allows a combustion gas generated by the combustion to be discharged from the combustion chamber by opening the exhaust port,
the combustion monitoring apparatus further comprises a temperature acquisition unit that acquires the temperature in a second specified period including a period from the end reference timing to an intake start timing at which the intake valve opens the intake port, and
the combustion prolongation determination unit is configured to determine that the remaining combustion has occurred in a case where the acquired temperature exceeds a temperature threshold.

11. The combustion monitoring apparatus according to Claim 1,
wherein the engine includes
a cylinder, a piston, and a cylinder head that define the combustion chamber,
an intake valve that is configured to open and close an intake port provided in the cylinder head and that allows the fuel to be taken into the combustion chamber by opening the intake port, and
an exhaust valve that is configured to open and close an exhaust port provided in the cylinder head and that allows a combustion gas generated by the combustion to be discharged from the combustion chamber by opening the exhaust port,
the combustion monitoring apparatus further comprises a light acquisition unit that acquires the brightness in a second specified period including a period from the end reference timing to an intake start timing at which the intake valve opens the intake port, and
the combustion prolongation determination unit is configured to determine that the remaining combustion has occurred in a case where the acquired brightness exceeds a light threshold.

12. The combustion monitoring apparatus according to Claim 1 or 2, further comprising:
a combustion controller that is configured to execute control for lowering the temperature in the combustion chamber in a case where it is determined that the remaining combustion has occurred.

13. The combustion monitoring apparatus according to Claim 12,
wherein the engine further includes a fuel injection device that injects the fuel to be supplied to the combustion chamber, and
the combustion controller is configured to control the fuel injection device such that at least one of retardation of a fuel injection timing in a next one combustion cycle or a decrease in a fuel injection amount in the next one combustion cycle occurs.

14. The combustion monitoring apparatus according to Claim 13,
wherein the combustion controller is configured to control the fuel injection device such that, in a case where it is determined that the remaining combustion has occurred, the fuel injection timing is retarded while maintaining the fuel injection amount in the next one combustion cycle as compared with the one combustion cycle in which the remaining combustion has occurred.

15. A combustion monitoring method for monitoring combustion of a fuel including a hydrogen fuel, which is periodically repeated in a combustion chamber of an engine, the combustion monitoring method comprising:
determining, based on at least one of a pressure, a temperature, or a brightness in the combustion chamber, whether remaining combustion in which the combustion continues even after an end reference timing set for ending the combustion during one combustion cycle has arrived.

16. A combustion monitoring program for monitoring combustion of a fuel including a hydrogen fuel, which is periodically repeated in a combustion chamber of an engine,
the combustion monitoring program causing a computer to
determine, based on at least one of a pressure, a temperature, or a brightness in the combustion chamber, whether remaining combustion in which the combustion continues even after an end reference timing at which the combustion should end in one combustion cycle has arrived has occurred.
